# FASCICULE DE BREVET EUROPEEN

(11) **EP 2 627 616 B1**
(45) Date de publication et mention de la délivrance du brevet: **15.08.2018**
(21) Numéro de dépôt: 11779829.8
(22) Date de dépôt: 10.10.2011
(51) Int. Cl.: C04B 35/14, C04B 35/626, C04B 38/04, C04B 38/06, C04B 38/00, B01D 39/20, B01D 21/06, E04B 1/74

(54) **PROCÉDÉ DE PRÉPARATION DE MATÉRIAUX MONOLITHIQUES INORGANIQUES ALVÉOLAIRES ET UTILISATIONS DE CES MATÉRIAUX**
VERFAHREN ZUR HERSTELLUNG ANORGANISCHER MONOLITHISCHER ZELLMATERIALIEN UND VERWENDUNG DIESER MATERIALIEN
PROCESS FOR PREPARING CELLULAR INORGANIC MONOLITHIC MATERIALS AND USES OF THESE MATERIALS

(30) Priorité: 11.10.2010 FR 1058247
(43) Date de publication de la demande: 21.08.2013
(73) Titulaire: Centre National de la Recherche Scientifique, 75016 Paris (FR)
(72) Inventeur: SCHMITT, Véronique, F-33400 Talence (FR); BACKOV, Rénal, F-33200 Bordeaux-cauderan (FR); DESTRIBAT, Mathieu, F-33000 Bordeaux (FR)
(74) Mandataire: Novagraaf Technologies
(86) Numéro de dépôt international: PCT/FR2011/052359
(87) Numéro de publication internationale: WO 2012/049412

(56) Documents cités:
- WO-A1-2007/068127
- FR-A1- 2 912 400
- Solans, Conxita ; Esquena, Jordi: "Chapter 6. Highly Concentrated Emulsions as Templates for Solid Foams", Emulsions and Emulsion Stability - Surfactant Science Series/61 edited by Johan Sjoblom, novembre 2005 (2005-11), pages 245-261, XP002626675, CRC Press 2006 DOI: 10.1201/9781420028089.ch6 ISBN: 978-0-8247-2695-9 Extrait de l'Internet: URL:http://www.crcnetbase.com/doi/pdf/10.1 201/9781420028089.ch6 [extrait le 2011-03-07]
- IBON ARANBERRI ET AL: "Synthesis of macroporous silica from solid-stabilised emulsion templates", JOURNAL OF POROUS MATERIALS, KLUWER ACADEMIC PUBLISHERS, BO, vol. 16, no. 4, 31 mai 2008 (2008-05-31), pages 429-437, XP019681933, ISSN: 1573-4854

## Description

La présente invention est relative à un procédé de préparation de matériaux monolithiques inorganiques macroporeux à macroporosité contrôlée permettant en particulier d'accéder à des monolithes de silice ayant une macroporosité ouverte et contrôlée avec une taille de macropores homogène (monodispersité) allant du micron à quelques centaines de microns et comportant éventuellement une porosité additionnelle, ainsi qu'à l'utilisation de ces matériaux, notamment pour la chimie séparative et la filtration, la réalisation de réactions chimiques catalysées en phase hétérogène, comme matériaux d'isolation thermique ou phonique, ou bien encore à titre d'empreinte pour la fabrication de squelettes carbonés à porosité contrôlée.

Les matériaux se présentant sous la forme de monolithes macroporeux à porosité ouverte, en fonction de leur nature chimique, constituent des matériaux de choix pour de nombreuses applications telles que la chimie séparative comme par exemple la chromatographie, la filtration, l'adsorption, la catalyse en phase hétérogène, la fabrication d'électrodes et le stockage de l'énergie en raison de leur grande surface spécifique, de leur grand volume de pores et de leurs excellentes propriétés mécaniques.

Au sens de la présente invention, une porosité ouverte est une porosité à laquelle on accède depuis l'extérieur du matériau et qui participe au transport de matière. Ces matériaux comprennent une surface spécifique élevée et une structure hiérarchisée.

A ce jour, un grand nombre de matériaux macroporeux synthétiques existent et différents types de procédés permettent d'y accéder.

B. P. Binks, Adv. Mater., 2002, 14(24), December 17, décrit la préparation de silice poreuse à partir d'une émulsion stabilisée par des particules de silice uniquement, en l'absence de tensioactif. L'évaporation à l'air produit des solides avec différents degrés de porosité et une mouillabilité inhérente. Les matériaux obtenus selon ce procédé sont cependant friables et manquent de cohésion (la cohésion provient uniquement de l'attraction entre les particules). Ils sont par ailleurs exempts de mésoporosité.

Gi-Ra Yi, et al., Chem. Mater., 1999, 11, 2322-2325, décrivent un procédé qui utilise le dodécylsulfonate de sodium (SDS) comme agent tensioactif. Un sol de silice est préparé en mélangeant du tetraéthoxysilane (TEOS) ou du tetraméthoxysilane (TMOS) et de l'acide chlorhydrique sous agitation. La gélification est obtenue par addition d'hydroxyde d'ammonium. Le produit final est obtenu par calcination. L'inconvénient de ce procédé est qu'il conduit à un matériau poreux mais dans lequel les pores ne sont pas monodisperses.

Plus récemment, il a également été proposé, notamment dans les demandes de brevet FR 2 852 947 ou FR 2 912 400, un procédé de préparation de monolithes inorganiques macroporeux consistant à préparer une émulsion en introduisant une phase huileuse dans une solution aqueuse de tensioactif, puis à ajouter une solution aqueuse d'au moins un précurseur d'oxyde de silicium à la solution de tensioactif, avant ou après la préparation de l'émulsion, et à laisser le mélange réactionnel au repos jusqu'à la condensation dudit précurseur, ce qui conduit, après séchage au monolithe de silice macroporeux. Les monolithes obtenus selon le procédé décrit dans FR 2 852 947 ont une macroporosité allant de 1 à 20 µm environ. Ce procédé ne permet cependant pas d'accéder à des monolithes de silice macroporeux dans lesquels la taille des pores peut excéder 20 µm. De plus, ces procédés présentent également l'inconvénient de conduire à un matériau dans lequel les pores ne sont pas monodisperses.

Différents auteurs ont également proposé des procédés de préparation de monolithes macroporeux par solidification d'une émulsion de Pickering, c'est-à-dire d'une émulsion huile-dans-eau ou eau-dans-huile dans laquelle les gouttelettes de la phase dispersée sont stabilisées par des particules solides colloïdales adsorbées à l'interface eau/huile. C'est ainsi que Li Z. et al. (Angew. Chem. Int., 2009, 48, 8490-8493) décrivent la préparation d'émulsions hexane-dans-eau stabilisées par adsorption de microparticules de gel polymère de poly(*N*-isopropylamide)-*co-*(acide méthacrylique) (PNIPAM-co-MMA) à l'interface huile/eau et dans lesquelles le PINPAM-co-MMA présent en excès dans l'émulsion forme un gel dans la phase continue de l'émulsion. L'évaporation à l'air de la phase continue, conduit, sans réaction chimique, à un matériau poreux mais dans lequel les pores ne sont pas interconnectés. Plus récemment, Ikem V. O. et al. (Langmuir, 2010, 26(11) 8836-8841) ont décrit la préparation d'émulsions huile-dans-eau stabilisées par des particules de titane fonctionnalisées qui conduisent, après polymérisation de l'émulsion, à des polymères hautement macroporeux mais dont les pores ne sont pas non plus interconnectés (porosité fermée). J. Esquena et C. Solans, ["Chapter 6, Highly Concentrated Emulsions as Templates for Solid Foams", Emulsions and Emulsion Stability - Surfactant Science Series/61 Edited by J. Sjoblom, 2006, pages 245-261] décrivent la préparation de mousses de silice texturées à partir d'émulsions hautement concentrées stabilisées par des particules solides (particules de silice) sans tensioactif. La solidification du monolithe se fait par séchage à partir d'une émulsion à 10 % en volume de décane dans l'eau contenant 4 % en masse de particules de silice et non par condensation d'un précurseur d'oxyde de silicium.
I. Aranberri et al., [Journal of Porous Material, Klumer Academic Publishers, BO, 2008, 16(4), 429-437] décrivent la synthèse de silice macroporeuse par évaporation d'émulsions stabilisées par des particules solides.

WO2007/068127 décrit une mousse présentant une stabilité à long-terme dans laquelle des particules colloïdales sont utilisées pour stabiliser l'interface formée entre des bulles de gaz et un liquide.

On constate donc un manque de matériaux inorganiques poreux et hiérarchisés se présentant sous la forme de monolithes macroporeux dans lesquels la taille des pores est contrôlée et homogène et peut varier de l'ordre du µm jusqu'à plusieurs centaines de µm et dans lesquels les pores sont interconnectées.

Le but de la présente invention est de fournir un procédé de préparation permettant d'accéder à de tels matériaux.

La présente invention a pour objet un procédé de préparation d'un matériau inorganique se présentant sous forme d'un monolithe alvéolaire constitué d'une matrice de silice comprenant des macropores interconnectés ayant une dimension moyenne d_{A} de 1 µm à 400 µm et des micropores de dimension moyenne d_{I} de 0,7 à 2 nm, ledit procédé étant caractérisé en ce qu'il comprend au moins une étape de minéralisation d'une émulsion huile-dans-eau formée de gouttelettes d'une phase huileuse dispersées dans une phase aqueuse continue et dans laquelle des particules solides colloïdales sont présentes à l'interface formée entre la phase aqueuse continue et les gouttelettes de phase huileuse dispersées, et en ce que :
- la fraction volumique de la phase huileuse varie de 64 à 82 % %, et
- ladite étape de minéralisation est réalisée sans agitation et à un pH inférieur ou égal à 3, en présence d'au moins un précurseur d'oxyde de silicium en une quantité supérieure ou égale à 3 % en masse par rapport à la masse de la phase aqueuse, et
- la quantité de particules solides colloïdales au sein de l'émulsion varie de 0,05 mg de particules/mL de phase huileuse à 16 g de particules/mL de phase huileuse.

Selon une forme de réalisation préférée de l'invention, la quantité de particules solides colloïdales au sein de l'émulsion varie de 3,5 mg/mL à 8 mg/mL de phase huileuse.

La mise en oeuvre de ce procédé permet, de façon surprenante, d'accéder à des monolithes de silice comportant un réseau macroporeux dans lequel les pores sont interconnectés (porosité ouverte) et ont une taille calibrée et homogène pouvant varier entre 1 et 400 µm. Il est en effet possible, grâce à la présence des particules solides colloïdales présente à l'interface de la phase huileuse et de la phase aqueuse, de stabiliser l'émulsion et de permettre une minéralisation homogène de la phase aqueuse conduisant de façon simple et reproductible à un monolithe de silice à macroporosité ouverte dans lequel la taille des macropores découle directement de la fraction volumique de la phase huileuse de l'émulsion ayant servi à sa préparation et de la taille des gouttes de l'émulsion qui peut être fixée de façon simple par la quantité de particules adsorbées à l'interface huile/eau (procédé de coalescence limitée). De plus, la présence des particules solides colloïdales à l'interface formée entre la phase aqueuse continue et les gouttelettes de phase huileuse dans les proportions indiquées ci-dessus, non seulement n'empêche par la formation d'un monolithe à porosité ouverte, mais en plus, permet d'accéder à un monolithe ayant une macroporosité monodisperse.

Au sens de la présente invention, on entend par monolithe, un objet solide ayant une dimension moyenne d'au moins 1 mm.

Selon l'invention, les micropores sont présents dans l'épaisseur des parois des macropores, les rendant alors microporeuses.

Selon une forme de réalisation particulière et préférée du procédé conforme à l'invention, le procédé comprend, dans cet ordre, les étapes suivantes :
i) la préparation d'une phase aqueuse renfermant au moins un précurseur d'oxyde de silicium en une quantité supérieure ou égale à 3 % en masse par rapport à la masse de la phase aqueuse et au moins un acide en une quantité suffisante pour amener la phase aqueuse à pH inférieur ou égal à 3 ;
ii) l'ajout, à ladite phase aqueuse, des particules solides colloïdales ;
iii) l'ajout, à ladite phase aqueuse contenant les particules colloïdales, de la phase huileuse, sous agitation mécanique jusqu'à obtention de ladite émulsion huile-dans-eau, puis
iv) la mise au repos de l'émulsion résultant de l'étape iii) jusqu'à obtention dudit matériau sous la forme d'un monolithe de silice macroporeux.

Selon cette première variante, l'étape i) provoque l'hydrolyse du précurseur d'oxyde de silicium, l'étape ii) provoque la dispersion des particules colloïdales, l'étape iii) conduit à la formation de l'émulsion huile-dans-eau dans laquelle les particules solides colloïdales sont adsorbées à l'interface eau/huile, tandis que l'étape iv) conduit à la minéralisation de l'émulsion, et donc à l'obtention du monolithe macroporeux, par condensation des précurseurs d'oxyde de silicium hydrolysés.

Selon une autre forme de réalisation particulière du procédé conforme à l'invention, l'émulsion huile-dans-eau est réalisée en une seule étape par mélange, sous agitation mécanique :
i) d'une phase aqueuse renferment au moins un précurseur d'oxyde de silicium en une quantité supérieure ou égale à 3 % en masse par rapport à la masse de la phase aqueuse, au moins un acide en une quantité suffisante pour amener la phase aqueuse à pH inférieur ou égal à 3, et des particules solides colloïdales en une quantité supérieure ou égale à 3 % en masse par rapport à la masse de la phase aqueuse et
ii) d'une phase huileuse en une quantité telle que la fraction volumique de la phase huileuse dans l'émulsion résultante varie de 64 à 82 % ;
ladite émulsion étant ensuite laissée au repos jusqu'à obtention dudit matériau sous la forme d'un monolithe de silice macroporeux.

La phase huileuse de l'émulsion est de préférence constituée par un ou plusieurs composés choisis parmi les alcanes linéaires ou ramifiés ayant de 7 à 22 atomes de carbone. A titre d'exemple de tels alcanes, on peut citer le dodécane et l'hexadécane.

La quantité de phase huileuse présente au sein de l'émulsion peut être ajustée en fonction du diamètre des macropores que l'on souhaite obtenir pour le monolithe de silice, étant entendu que plus la fraction volumique huile/eau sera élevée, plus le diamètre des gouttelettes d'huile au sein de l'émulsion sera faible et plus le diamètre des macropores sera faible également.

Selon l'invention, la fraction volumique de la phase huileuse de l'émulsion varie de 64 à 82 %. Ces quantités de phase huileuse permettent d'obtenir un monolithe de silice macroporeux dans lequel le diamètre moyen des macropores varie de 1 à 400 µm environ.

Les particules solides colloïdales peuvent être minérales ou organiques. De préférence, il s'agit de particules minérales choisies dans le groupe des oxydes, hydroxydes et sulfates de métaux. Parmi de tels oxydes, on peut tout particulièrement citer les oxydes de silicium, de titane, de zirconium et, de fer, ainsi que leurs sels tels que les silicates (par exemple les argiles). Enfin, on peut citer les particules colloïdales de carbone. Parmi les particules solides colloïdales organiques, on peut citer notamment les particules polymériques, par exemple des particules de latex.

Afin d'être colloïdales, les particules solides présentent généralement une taille inférieure à quelques micromètres. Ainsi les particules présentent généralement une taille moyenne comprise entre 5 et 5000 nm inclusivement, et de préférence entre 5 et 500 nm inclusivement.

La quantité de particules (à quantité d'huile fixée) présente au sein de l'émulsion peut être ajustée en fonction du diamètre des macropores que l'on souhaite obtenir pour le monolithe de silice, étant entendu que plus la quantité de particules sera élevée, plus le diamètre des gouttelettes d'huile au sein de l'émulsion sera faible et plus le diamètre des macropores sera faible également.

Selon une forme de réalisation particulièrement préférée de l'invention, les particules solides colloïdales sont choisies parmi les nanoparticules d'oxyde de silicium. A titre d'exemple, on peut notamment citer les produits vendus sous la dénomination commerciale Aerosil ® par la société Evonik Degussa.

Avantageusement, la quantité de particules solides colloïdales présentes dans la phase aqueuse continue varie en fonction de la taille moyenne en volume souhaitée des gouttelettes de la phase huileuse dans l'émulsion et par voie de conséquence, de la taille souhaitée pour les macropores du matériau. Le diamètre moyen des gouttelettes de phase huileuse au sein de l'émulsion peut varier entre 1 µm et 1 mm environ, de préférence entre 10 et 200 µm environ.

Par ailleurs, les particules solides colloïdales présentent généralement une surface hydrophile et chargée, ce qui ne favorise pas leur adsorption à la surface des gouttelettes de la phase huileuse dispersée. Ainsi, et selon une forme de réalisation particulièrement préférée de l'invention, les particules solides colloïdales sont fonctionnalisées en surface pour les rendre plus hydrophobes et ainsi favoriser leur adsorption à l'interface formée entre la phase aqueuse continue et les gouttelettes de phase grasse dispersées.

Les particules solides colloïdales peuvent ainsi être fonctionnalisées par des composés liés à leur surface par des liaisons covalentes. Cela peut être réalisé par traitement préalable des particules, en particulier par greffage chimique d'un composé comportant des groupements hydrophobes tel qu'un alkylsilane ou un trialkoxysilane de formule R-Si-(OR')₃, dans laquelle R est un alkyle linéaire ou ramifié en C₁ à C₁₂, en particulier de C₂ à C₁₀, tout particulièrement n-octyle, portant éventuellement un groupe amino et R', identique ou différent de R, est un groupe alkyle linéaire ou ramifié en C₁ à C₁₂, en particulier de C₁ à C₆, et tout particulièrement éthyle. L'utilisation de ce type de particules conduit à l'obtention d'un monolithe de silice macroporeux fonctionnalisé (présence de groupements R'). A titre d'exemple de telles particules, on peut notamment citer les particules de silice colloïdale vendue sous la dénomination commerciale Aerosil® R816 par la société Evonik Degussa, ayant un diamètre moyen d'environ 12 nm et à la surface desquelles des groupements hexadecylsilane sont fixés.

Les particules solides colloïdales peuvent également être fonctionnalisées par adsorption de molécules de tensioactif à leur surface qui permettent de leur conférer une certaine hydrophobie, l'extrémité hydrophile du tensioactif étant adsorbée sur la surface des particules. Les tensioactifs utilisables pour fonctionnaliser les particules sont de préférence des tensioactifs cationiques ou anioniques. Parmi ces tensioactifs, on préfère en particulier les tensioactifs cationiques choisis notamment parmi le bromure de tetradécyltriméthylammonium (TTAB), le bromure de dodécyltriméthylammonium ou le bromure de cétyl-triméthylammonium (CTAB). Le TTAB est particulièrement préféré.

A titre d'exemple de particules fonctionnalisées par un tensioactif, on peut notamment citer les nanoparticules de silice dont la surface est fonctionnalisée par un ammonium quaternaire telles que celles vendues sous la dénomination Aerosil® A380 par la société Evonik Degussa, de diamètre 7 nm, et dont la surface est fonctionnalisée par le bromure de tetradécyltriméthylammonium (CTAB).

La fonctionnalisation des particules solides colloïdales par un tensioactif peut également être réalisée *in situ,* c'est-à-dire lors de leur introduction dans la phase aqueuse continue de l'émulsion. Dans ce cas, la phase aqueuse continue de l'émulsion renferme en outre ledit tensioactif en une quantité préférentiellement inférieure à la concentration micellaire critique (CMC), celui-ci venant alors s'adsorber à la surface des particules lorsque celles-ci sont dans la phase aqueuse de l'émulsion. De préférence, la quantité de tensioactif varie de 1/200^{ème} à 1/3 de la CMC.

A titre d'exemple de nanoparticules solides colloïdales fonctionnalisées *in situ* par un tensioactif, on peut notamment citer les nanoparticules de silice dont la surface est préalablement fonctionnalisée par de l'hexadecylsilane, telles que celles vendues sous la dénomination commerciale Aerosil® R816 par la société Evonik Degussa, ayant un diamètre moyen d'environ 12 nm, et dont la surface peut, de façon optionnelle, être ensuite fonctionnalisées d'avantage *in situ* par adsorption d'un tensioactif cationique tel que par exemple le TTAB.

Selon une forme de réalisation particulièrement préférée de l'invention, le rapport « nombre de molécules de tensioactifs par unité de surface de particules », c'est-à-dire, le rapport massique masse de tensioactif (**m_{TA}**) / masse de particules colloïdales (**mₚ**), soit **m_{TA}** / **mₚ** varie de 1 mg de tensioactif par gramme de particules à 0,8 g de tensioactif par gramme de particules, et encore plus préférentiellement de 0,5 mg de tensioactif par g de particules à 0,1g de tensioactif par g de particules.

L'agitation mécanique réalisée lors de la deuxième étape peut notamment être réalisée dans un dispositif destiné à émulsionner tel que par exemple dans des dispositifs vendus sous les dénominations commerciales Ultra-Turrax® ou Rayneri®.

Le ou les précurseur(s) d'oxyde de silicium sont de préférence choisis parmi le tetraméthoxyorthosilane (TMOS), le tetraéthoxyorthosilane (TEOS), le diméthyldiéthoxysilane (DMDES) et les mélanges du DMDES avec le TEOS ou le TMOS.

Selon une forme de réalisation préférée de l'invention, le précurseur de silice est le TEOS.

La concentration en précurseur(s) d'oxyde de silicium au sein de la phase aqueuse de l'émulsion varie de préférence de 25 à 35 % en masse par rapport à la masse de la phase aqueuse.

Outre le ou les précurseurs d'oxyde de silicium, la phase aqueuse de l'émulsion peut également comprendre un ou plusieurs précurseurs d'un oxyde métallique de formule MeO₂ dans laquelle Me est un métal choisi parmi Zr, Ti, Th, Nb, Ta, V, W et Al. Ces précurseurs d'oxyde métallique sont de préférence choisis parmi les alcoxydes, les chlorures et les nitrates des métaux choisis parmi Zr, Ti, Th, Nb, Ta, V, W et Al. Lorsqu'un précurseur d'un oxyde métallique est utilisé, la matrice du monolithe est une matrice mixte de type SiO₂-MeO₂ dans laquelle la teneur en MeO₂ reste minoritaire par rapport à la teneur en oxyde de silicium, préférentiellement la teneur en précurseur d'oxyde métallique MeO₂ au sein de la phase aqueuse représente de 1 % à 30 % en masse par rapport à la masse des précurseurs d'oxyde de silicium, plus particulièrement de 5% à 20% en masse par rapport à la masse de précurseurs d'oxyde de silicium.

Selon une forme de réalisation préférée de l'invention, l'étape de minéralisation est réalisée à un pH inférieur ou égal à 1.

L'étape de minéralisation est effectuée avantageusement à une température proche de la température ambiante. La durée de cette étape peut varier de quelques heures (2 à 3 heures) à quelques semaines (2 à 3 semaines) en fonction du pH du milieu réactionnel.

L'acide utilisé pour ajuster le pH de la phase aqueuse de l'émulsion à la valeur désirée est de préférence choisi parmi l'acide chlorhydrique (HCl), l'acide orthophosphorique (H₃PO₄), l'acide nitrique (HNO₃), l'acide acétique (CH₃COOH) et l'acide formique HCOOH.

Le monolithe obtenu à l'issue de l'étape de minéralisation est de préférence ensuite lavé et séché.

Le lavage du matériau permet d'éliminer les résidus organiques provenant de la phase huileuse et se trouvant essentiellement dans les macropores. Ce lavage peut être réalisé à l'aide d'un solvant organique volatil tel que l'acétone, le tetrahydrofurane (THF) ou leurs mélanges.

Selon une forme de réalisation particulière du procédé de l'invention, le matériau peut en outre subir une étape de calcination, effectuée par exemple à une température de 180 à 700°C, et de préférence de 600 à 700°C. En particulier, lorsque des particules solides colloïdales fonctionnalisées par des groupements hydrophobes tel qu'un trialkoxysilane de formule R-Si-(OR')₃ comme décrit précédemment, ont été utilisées dans l'émulsion ayant conduit à l'élaboration du monolithe, il est préférable de procéder à la calcination du monolithe à une température de 180-200°C environ, de façon à ne pas calciner le groupement R'.

La fonctionnalisation des monolithes obtenus selon le procédé conforme à l'invention peut également être effectuée *a posteriori,* c'est-à-dire après l'étape de minéralisation. Dans ce cas, le procédé conforme à l'invention comprend en outre, de préférence après l'étape de calcination, une étape d'imprégnation du monolithe à l'aide d'une solution renfermant un agent de fonctionnalisation.

Le matériau obtenu conformément au procédé de l'invention, peut être utilisé pour différentes applications industrielles, telles que par exemple pour la chimie séparative et la filtration, la réalisation de réactions chimiques catalysées en phase hétérogène, comme matériaux d'isolation thermique ou phonique (en particulier comme isolant acoustique sélectif hautes fréquences), ou bien encore à titre d'empreinte pour la fabrication de squelettes carbonés à porosité contrôlée. Dans ce dernier cas, le matériau conforme à l'invention sert simplement d'empreinte ; il est imprégné par une solution de précurseurs de carbone, puis carbonisé de façon à obtenir, après dissolution du matériau conforme à l'invention, un monolithe de carbone macroporeux.

Dans le domaine de la chimie séparative, il est en particulier possible d'utiliser les matériaux obtenus conformément au procédé de l'invention pour la préparation de colonnes de chromatographie macroporeuses dans lesquelles la porosité est hiérarchisée et calibrée. Dans ce cas, la colonne de chromatographie peut être constituée de plusieurs monolithes macroporeux conformes à l'invention et empilés les uns sur les autres, lesdits monolithes comportant soit des porosités identiques, soit des porosités différentes résultant de la minéralisation d'émulsions comprenant des gouttelettes de tailles différentes et minéralisées de façon concomitante pour créer des colonnes de chromatographie à gradient de macroporosité.

La présente invention est illustrée par les exemples de réalisation suivants, auxquels elle n'est cependant pas limitée.

### EXEMPLES

Les matières premières utilisées dans les exemples qui suivent sont listées ci-après :
- Bromure de tetradécyltriméthylammonium à 98 % (TTAB) : société Alfa Aesar ;
- Tetraéthoxyorthosilane à 98 % (TEOS) : société Aldrich ;
- Hexadécane à 99 % (masse volumique : 0,773 g/cm3) : société Sigma-Aldrich ;
- Acétone commercial ;
- Tetrahydrofurane ;
- Acide chlorhydrique à 37 % et de qualité ISO pour analyses : société Carlo Erba Reagent ;
- Nanoparticules de silice fonctionnalisées par des groupements hexadecylsilane, vendues sous la dénomination commerciale Aerosil® R816 par la société Evonik Degussa (diamètre : 12 nm, surface spécifique : 190 ± 20 m²/g ;
- Eau déminéralisée.

Ces matières premières ont été utilisées telles que reçues des fabricants, sans purification supplémentaire.

Dans les exemples qui suivent, chacune des émulsions préparées avait un volume total de 20 mL.

Dans ce qui suit **mₚ** indique la quantité en g de nanoparticules de silice utilisée pour 20 mL d'émulsion et φ est la fraction volumique de l'huile (hexadécane) au sein de l'émulsion.

La macroporosité a été caractérisée de manière qualitative par une technique MEB à l'aide du microscope TM-1000 de la société Hitachi. Les échantillons ont été revêtus d'or ou de carbone par dépôt plasma avant leur caractérisation.

### Exemple 1

### Préparation de monolithes de silice macroporeux à partir d'émulsions de φ variées

Dans cet exemple, on a préparé différents monolithes de silice à partir d'émulsions eau-dans-huile ayant différentes fractions volumiques en huile.

Le protocole général suivant a été utilisé :
i) la phase aqueuse a été préparée en mélangeant l'eau en quantité adaptée à la fraction volumique en huile (φ) désirée, les nanoparticules en quantité mₚ, 0,29 g de HCl et 2,24 g de TEOS. Ce mélange a été laissé au repos jusqu'à hydrolyse du TEOS. La suspension a été éventuellement soniquée à l'aide d'un bain à ultrasons afin de mieux disperser les particules. L'hexadécane a été ajouté en quantité correspondant à φ. L'ensemble a été agité à l'aide d'un homogénéiseur de type Ultra Turrax ® (vendu par la société Janke-Kunkel IKA Labortechnik) à une vitesse de 24000 tours/min pendant environ 30 secondes.
ii) la solidification des émulsions s'est faite au repos pendant 10 jours pour permettre la polycondensation du précurseur de silice (TEOS) au sein de la phase continue de l'émulsion sous la forme d'un monolithe de silice.
iii) les monolithes de silice ainsi obtenus ont été lavés pendant 3 x 24 H dans des bains constitués d'un mélange acétone/THF (30/70 : v/v) afin d'éliminer l'huile résiduelle présente au sein des macropores du monolithe et séchés dans un dessiccateur à température ambiante pendant 7 jours.
iv) les monolithes ont ensuite été calcinés dans un four tubulaire (de la marque Nabertherm, code fabricant LT311P330) sous air et selon le programme de température suivant : montée en température jusqu'à 200°C à une vitesse de 2°C/min, palier à 200°C pendant 2 heures, montée à 650°C à une vitesse de 2°C/min, palier à 650°C pendant 6 heure, arrêt du four et retour à la température ambiante selon l'inertie du four. Cette étape de calcination permet d'éliminer les traces de matières organiques restantes (huile, solvants, etc..) mais également de densifier la matière par frittage de la silice.

Le tableau I ci-après donne les caractéristiques des monolithes fabriqués selon ce protocole (les protocoles menant à M₈₅ et M₈₇ ne sont pas selon l'invention) :

**TABLEAU I**

| **Monolithe** | **mₚ (en g)** | **φ (en %)** | **Taille des macropores (en µm)** |
|---|---|---|---|
| **M₆₄** | 0,050 | 64 | 144 |
| **M₇₀** | 0,055 | 70 | 208 |
| **M₇₅** | 0,059 | 75 | 136 |
| **M₈₀** | 0,062 | 80 | 154 |
| **M₈₅** | 0,066 | 85 | 178 |
| **M₈₇** | 0,068 | 87 | 143 |

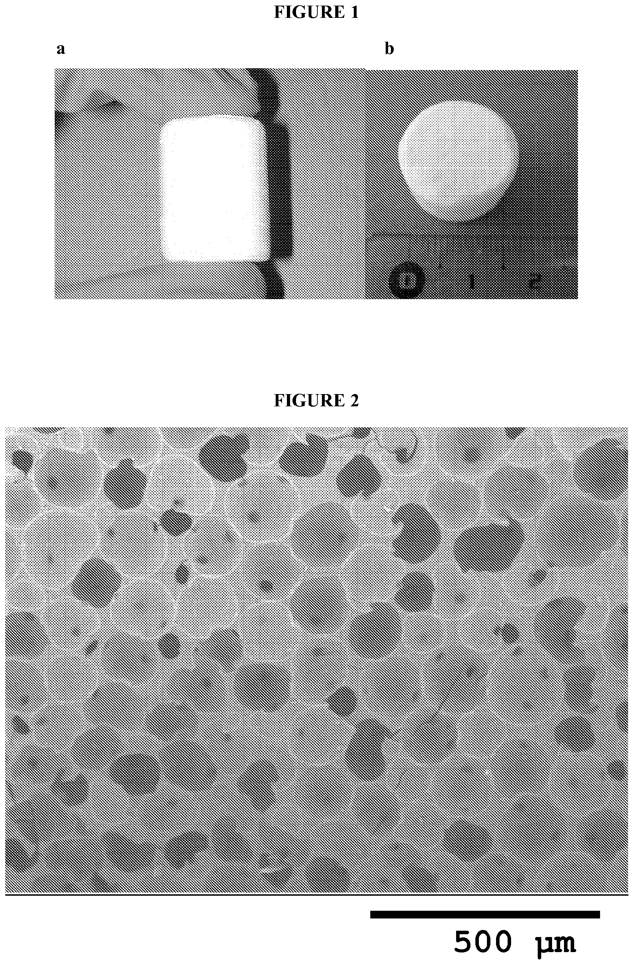

La figure 1 annexée est une photographie du monolithe M₇₅ en vue latérale (figure la) et en vue sur le dessus (figure 1b).
   Les monolithes M₆₄ ; M₇₅ ; M₈₀ et M₈₅ ont été examinés en microscopie électronique à balayage (MEB) à l'aide d'un microscope vendu sous la référence TM-1000 par la société Hitachi, avant et après l'étape de calcination.
La figure 2 annexée est la photographie MEB du monolithe M₆₄ avant calcination.

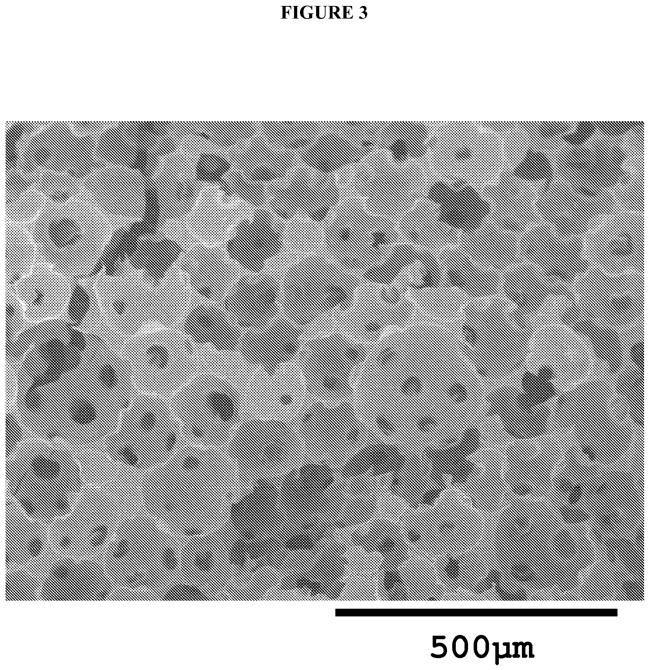

La figure 3 annexée est la photographie MEB du monolithe M₇₅ avant calcination.

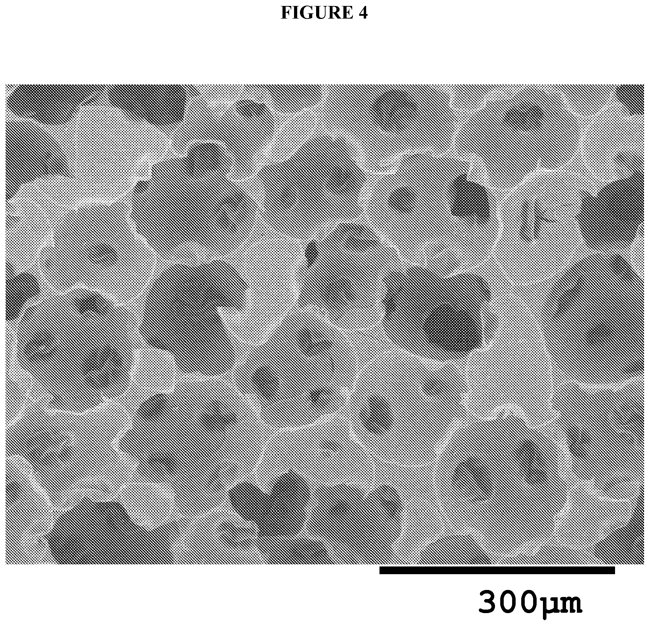

La figure 4 annexée est la photographie MEB du monolithe M₈₀ avant calcination.

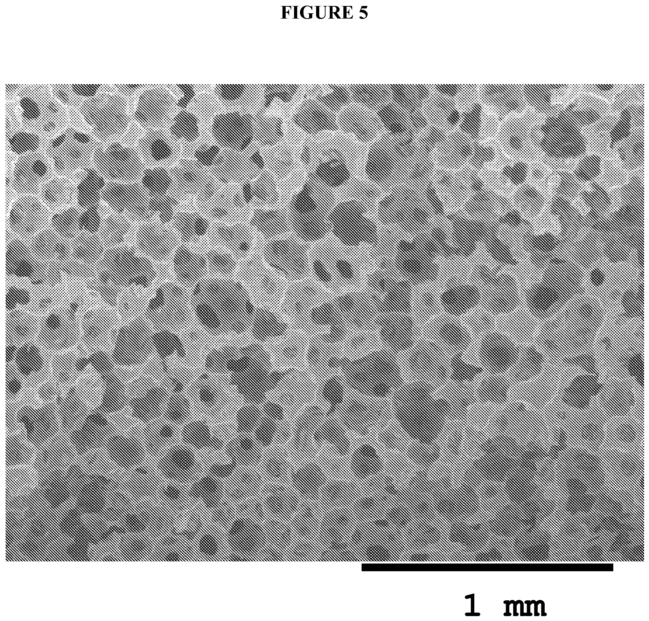

La figure 5 annexée est la photographie MEB du monolithe M₈₅ avant calcination.

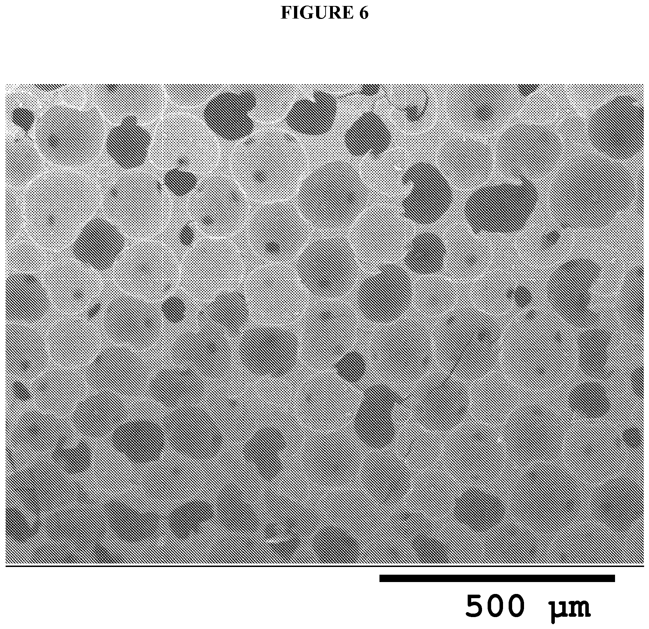

La figure 6 annexée est la photographie MEB du monolithe M₆₄ après calcination.

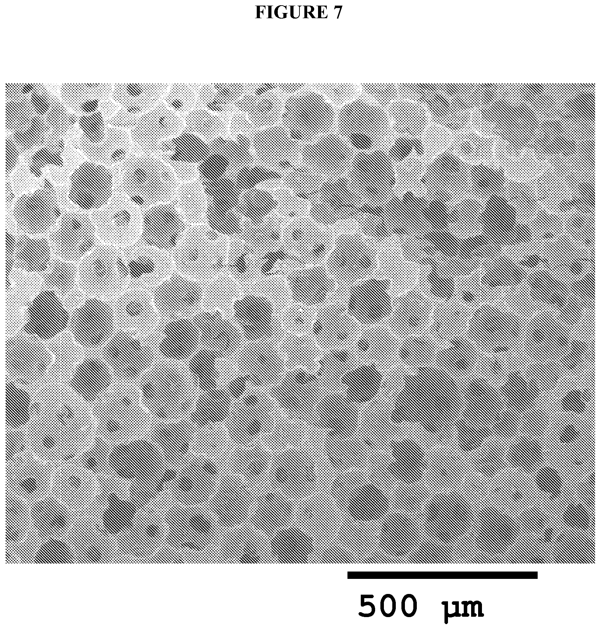

La figure 7 annexée est la photographie MEB du monolithe M₇₅ après calcination.

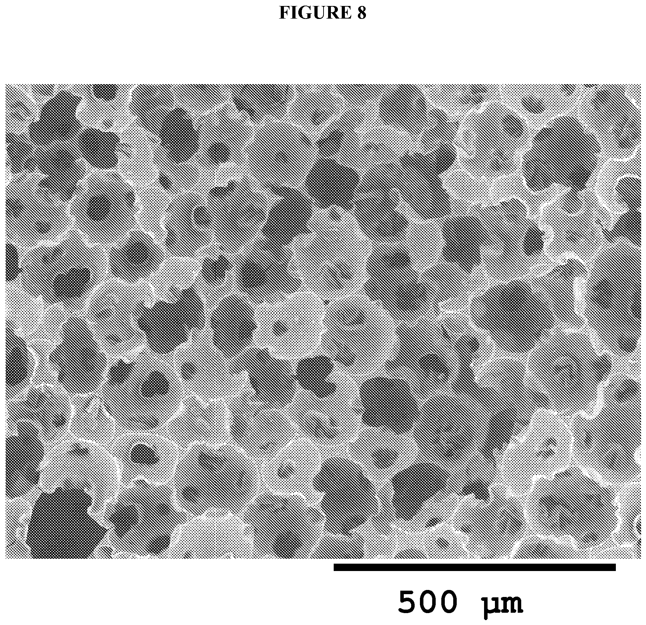

La figure 8 annexée est la photographie MEB du monolithe M₈₀ après calcination.

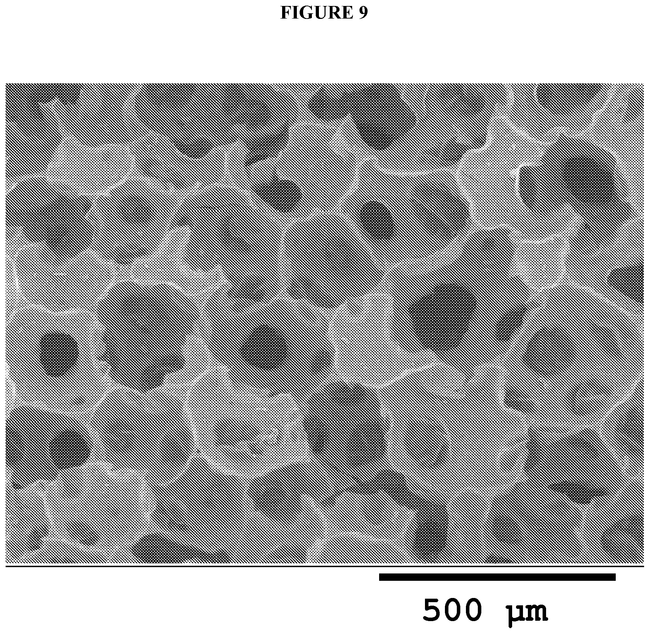

La figure 9 annexée est la photographie MEB du monolithe M₈₅ après calcination.

Ces résultats montrent que le volume des macropores augmente avec la fraction volumique de la phase huileuse.

### Exemple 2

### Préparation de monolithes de silice macroporeux de tailles de pore variées à partir d'émulsions contenant des particules colloïdales fonctionnalisées par un tensioactif

Dans cet exemple, un tensioactif cationique, le TTAB a été utilisé pour fonctionnaliser les particules Aerosil R816 utilisées ci-dessus à l'exemple 1. La quantité de particules a été variée pour faire varier la taille des pores en maintenant le rapport m_{TA}/mₚ constant et égal à 0,0107. Dans cet exemple φ a été choisie constante et égale à 64% c'est-à-dire que la phase huileuse est composée d'une quantité fixe de 12,8 ml d'hexadécane.

La composition de la phase aqueuse était la suivante : 2,85g de HCl, 2,24g de TEOS, mₚ g de particules, m_{TA}=0,0107 x mp g de TTAB et quantité suffisante d'eau pour 7,2 ml.

Hormis ces différences, le protocole de préparation des monolithes est identique à celui utilisé et décrit ci-dessus dans l'exemple 1.

Le tableau II ci-après donne les caractéristiques de chacun des monolithes ainsi préparés :

**TABLEAU II**

| **Monolithe** | **mₚ (en g)** | **Taille des macropores (en µm)** |
|---|---|---|
| **M_{0,025}** | 0,025 | 167 |
| **M_{0,050}** | 0,050 | 87 |
| **M_{0,075}** | 0,075 | 56 |
| **M_{0,10}** | 0,10 | 43 |
| **M_{0,15}** | 0,15 | 24 |
| **M_{0,20}** | 0,20 | 17 |

Après calcination, les monolithes M_{0,025} et M_{0,075} ont été examinés en microscopie électronique à balayage (MEB) à l'aide d'un microscope vendu sous la référence TM-1000 par la société Hitachi.

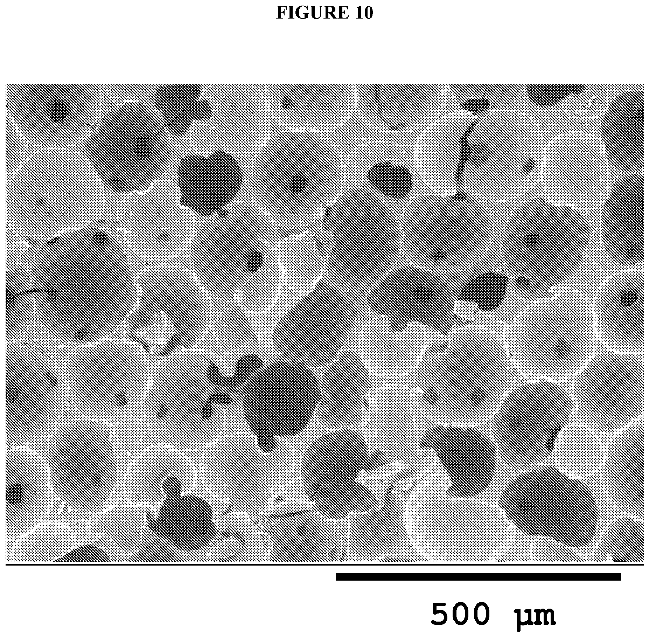

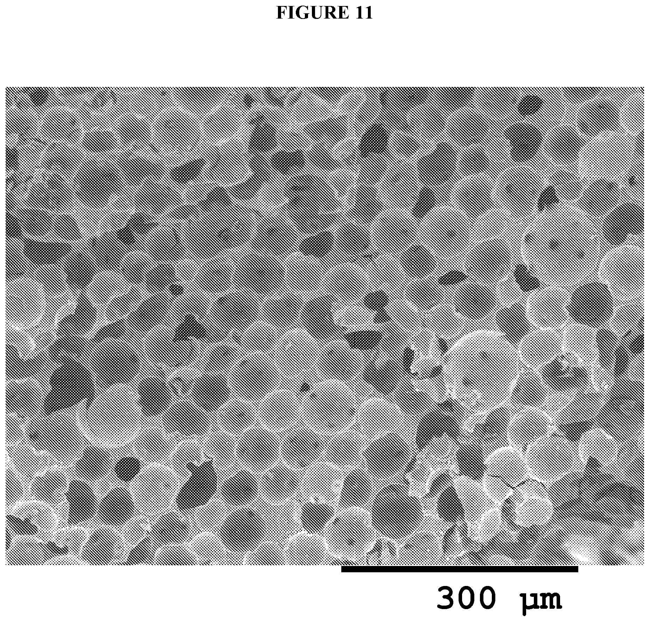

Les figures 10 et 11 annexées sont respectivement les photographies MEB des monolithes M_{0,025} et M_{0,075} après calcination.

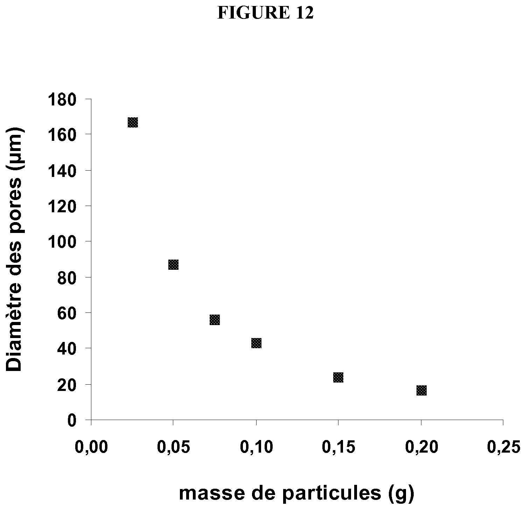

Enfin, la figure 12 annexée représente l'évolution du diamètre des pores (en µm) en fonction de la masse de particules (en g).

Le fait d'utiliser du tensioactif pour fonctionnaliser les particules permet une meilleure adsorption de celles-ci à l'interface huile/eau et un bon contrôle de la taille comme on peut le voir sur la figure 12.

## Revendications

1. Procédé de préparation d'un matériau inorganique se présentant sous forme d'un monolithe alvéolaire constitué d'une matrice de silice comprenant des macropores interconnectés ayant une dimension moyenne d_{A} de 1 µm à 400 µm et des micropores de dimension moyenne d_{I} de 0,7 à 2 nm, ledit procédé étant **caractérisé en ce qu'**il comprend au moins une étape de minéralisation d'une émulsion huile-dans-eau formée de gouttelettes d'une phase huileuse dispersées dans une phase aqueuse continue et dans laquelle des particules solides colloïdales sont présentes à l'interface formée entre la phase aqueuse continue et les gouttelettes de phase huileuse dispersées, et **en ce que** :
- la fraction volumique de la phase huileuse varie de 64 à 82 %,
- ladite étape de minéralisation est réalisée sans agitation et à un pH inférieur ou égal à 3, en présence d'au moins un précurseur d'oxyde de silicium en une quantité supérieure ou égale à 3 % en masse par rapport à la masse de la phase aqueuse, et
- la quantité de particules solides colloïdales au sein de l'émulsion varie de 0,05 mg de particules/mL de phase huileuse à 16 g de particules/mL de phase huileuse.

2. Procédé selon la revendication 1, **caractérisé en ce qu'**il comprend, dans cet ordre, les étapes suivantes :
i) la préparation d'une phase aqueuse renfermant au moins un précurseur d'oxyde de silicium en une quantité supérieure ou égale à 3 % en masse par rapport à la masse de la phase aqueuse et au moins un acide en une quantité suffisante pour amener la phase aqueuse à pH inférieur ou égal à 3 ;
ii) l'ajout, à ladite phase aqueuse, des particules solides colloïdales ;
iii) l'ajout, à ladite phase aqueuse contenant les particules colloïdales, de la phase huileuse, sous agitation mécanique jusqu'à obtention de ladite émulsion huile-dans-eau, puis
iv) la mise au repos de l'émulsion résultant de l'étape iii) jusqu'à obtention dudit matériau sous la forme d'un monolithe de silice .

3. Procédé selon la revendication 1, **caractérisé en ce que** l'émulsion huile-dans-eau est réalisée en une seule étape par mélange, sous agitation mécanique :
i) d'une phase aqueuse renferment au moins un précurseur d'oxyde de silicium en une quantité supérieure ou égale à 3 % en masse par rapport à la masse de la phase aqueuse, au moins un acide en une quantité suffisante pour amener la phase aqueuse à pH inférieur ou égal à 3, et des particules solides colloïdales en une quantité supérieure ou égale à 3 % en masse par rapport à la masse de la phase aqueuse et
ii) d'une phase huileuse en une quantité telle que la fraction volumique de la phase huileuse dans l'émulsion résultante varie de 64 à 82 % ;
ladite émulsion étant ensuite laissée au repos jusqu'à obtention dudit matériau sous la forme d'un monolithe de silice.

4. Procédé selon l'une quelconque des revendications précédentes, **caractérisé en ce que** la phase huileuse de l'émulsion est constituée par un ou plusieurs composés choisis parmi les alcanes linéaires ou ramifiés ayant de 7 à 22 atomes de carbone.

5. Procédé selon la revendication 4, **caractérisé en ce que** les alcanes sont choisis parmi le dodécane et l'hexadécane.

6. Procédé selon l'une quelconque des revendications précédentes, **caractérisé en ce que** les particules solides colloïdales sont des particules minérales choisies dans le groupe des oxydes, hydroxydes et sulfates de métaux.

7. Procédé selon l'une quelconque des revendications précédentes, **caractérisé en ce que** les particules sont choisies parmi les nanoparticules d'oxyde de silicium.

8. Procédé selon l'une quelconque des revendications précédentes, **caractérisé en ce qu'**au sein de l'émulsion, la quantité de particules solides colloïdales varie de 3,5 mg de particules/mL de phase huileuse à 8 mg de particules/mL de phase huileuse.

9. Procédé selon l'une quelconque des revendications précédentes, **caractérisé en ce que** les particules solides colloïdales sont fonctionnalisées par des composés liés à leur surface par des liaisons covalentes, lesdits composés comportant des groupements hydrophobes.

10. Procédé selon l'une quelconque des revendications 1 à 8, **caractérisé en ce que** les particules solides colloïdales sont fonctionnalisées par adsorption de molécules de tensioactif à leur surface.

11. Procédé selon l'une quelconque des revendications précédentes, **caractérisé en ce que** le rapport massique masse de tensioactif / masse de particules colloïdales varie de 1 mg de tensioactif par gramme de particules à 0,8 g de tensioactif par gramme de particules.

12. Procédé selon l'une quelconque des revendications précédentes, **caractérisé en ce que** les précurseurs d'oxyde de silicium sont choisis parmi le tetraméthoxyorthosilane, le tetraéthoxyorthosilane, le diméthyldiéthoxysilane et les mélanges du diméthyldiéthoxysilane avec le tetraéthoxyorthosilane ou le tetraméthoxyorthosilane.

13. Procédé selon l'une quelconque des revendications précédentes, **caractérisé en ce que** la concentration en précurseur(s) d'oxyde de silicium au sein de la phase aqueuse de l'émulsion varie de 25 à 35 % en masse par rapport à la masse de la phase aqueuse.

14. Procédé selon l'une quelconque des revendications précédentes, **caractérisé en ce que** la phase aqueuse de l'émulsion comprend en outre un ou plusieurs précurseurs d'un oxyde métallique de formule MeO₂ dans laquelle Me est un métal choisi parmi Zr, Ti, Th, Nb, Ta, V, W et Al, en une quantité variant de 1 % à 30 % en masse par rapport à la masse des précurseurs d'oxyde de silicium.

15. Procédé selon la revendication 14, **caractérisé en ce que** les précurseurs d'oxyde métallique sont choisis parmi les alcoxydes, les chlorures et les nitrates des métaux choisis parmi Zr, Ti, Th, Nb, Ta, V, W et Al.

16. Procédé selon l'une quelconque des revendications précédentes, **caractérisé en ce que** l'étape de minéralisation est réalisée à un pH inférieur ou égal à 1.

17. Procédé selon l'une quelconque des revendications précédentes, **caractérisé en ce qu'**il comprend en outre, une étape d'imprégnation du monolithe à l'aide d'une solution renfermant un agent de fonctionnalisation.

18. Utilisation d'un matériau inorganique se présentant sous forme d'un monolithe alvéolaire constitué d'une matrice de silice comprenant des macropores interconnectés ayant une dimension moyenne d_{A} de 1 µm à 400 µm et des micropores de dimension moyenne d_{I} de 0,7 à 2 nm tel qu'obtenu selon le procédé défini à l'une quelconque des revendications précédentes, pour la chimie séparative et la filtration, la réalisation de réactions chimiques catalysées en phase hétérogène, comme matériau d'isolation thermique ou phonique, ou bien encore à titre d'empreinte pour la fabrication de squelettes carbonés à porosité contrôlée.

19. Utilisation selon la revendication 18, comme matériau isolant acoustique sélectif hautes fréquences.

20. Utilisation selon la revendication 18, pour la préparation de colonnes de chromatographie à porosité hiérarchisée et calibrée.

21. Utilisation selon la revendication 20, **caractérisée en ce que** la colonne de chromatographie est constituée de plusieurs monolithes macroporeux et empilés les uns sur les autres, lesdits monolithes comportant soit des porosités identiques, soit des porosités différentes résultant de la minéralisation d'émulsions comprenant des gouttelettes de tailles différentes et minéralisées de façon concomitante pour créer des colonnes de chromatographie à gradient de macroporosité.

## Patentansprüche

1. Herstellungsverfahren eines anorganischen Materials, das in der Form eines alveolaren Monolithen vorliegt, bestehend aus einer Silicamatrix, umfassend miteinander verbundene Makroporen, die eine mittlere Dimension d_{A} von 1 µm bis 400 µm, und Mikroporen, die eine mittlere Dimension d_{I} von 0,7 bis 2 nm aufweisen, wobei das Verfahren **dadurch gekennzeichnet ist, dass** es mindestens einen Mineralisierungsschritt einer Öl-in-Wasser-Emulsion umfasst, gebildet aus Tröpfchen einer in einer kontinuierlichen wässrigen Phase dispergierten öligen Phase, und in welcher die festen kolloidalen Teilchen an der zwischen der kontinuierlichen wässrigen Phase und den dispergierten Tröpfchen der öligen Phase gebildeten Grenzfläche vorliegen, und dadurch, dass:
- der Volumenanteil der öligen Phase von 64 bis 82 % variiert,
- der Mineralisierungsschritt ohne Rühren und bei einem pH-Wert unterhalb von oder gleich 3 in Gegenwart von mindestens einem Vorläufer von Siliciumdioxid in einer Menge von mehr als oder gleich 3 Massen-%, bezogen auf die Masse der wässrigen Phase, durchgeführt wird und
- die Menge der kolloidalen Feststoffteilchen innerhalb der Emulsion von 0,05 mg Teilchen/ml der öligen Phase bis 16 g Teilchen/ml der öligen Phase variiert.

2. Verfahren nach Anspruch 1, **dadurch gekennzeichnet, dass** es in dieser Reihenfolge die folgenden Schritte umfasst:
i) die Herstellung einer wässrigen Phase, enthaltend mindestens einen Siliciumdioxidvorläufer in einer Menge größer als oder gleich 3 Massen-%, bezogen auf die Masse der wässrigen Phase, und mindestens eine Säure in einer Menge, die ausreicht, die wässrige Phase auf einen pH-Wert kleiner als oder gleich 3 zu bringen;
ii) das Hinzufügen von kolloidalen Feststoffteilchen zu der wässrigen Phase;
iii) das Hinzufügen der öligen Phase zu der die kolloidalen Teilchen enthaltenden wässrigen Phase unter mechanischem Rühren, bis zum Erhalten der Öl-in-Wasser-Emulsion, danach
iv) das Ruhenlassen der aus dem Schritt iii) resultierenden Emulsion bis zum Erhalten des Materials in der Form eines Silicamonolithen.

3. Verfahren nach Anspruch 1, **dadurch gekennzeichnet, dass** die Öl-in-Wasser-Emulsion in einem einzigen Schritt realisiert wird, durch Mischen unter mechanischem Rühren:
i) einer wässrigen Phase, enthaltend mindestens einen Siliciumdioxidvorläufer in einer Menge größer als oder gleich 3 Massen-%, bezogen auf die Masse der wässrigen Phase, mindestens einer Säure in einer Menge, die ausreicht, die wässrige Phase auf einen pH-Wert kleiner als oder gleich 3 zu bringen, und kolloidaler Feststoffteilchen in einer Menge größer als oder gleich 3 Massen-% bezogen auf die Masse der wässrigen Phase und
ii) einer öligen Phase in einer Menge, sodass der Volumenanteil der öligen Phase in der Emulsion von 64 bis 82 % variiert;
wobei die Emulsion danach bis zum Erhalten des Materials in der Form eines Silicamonolithen ruhen gelassen wird.

4. Verfahren nach einem der vorstehenden Ansprüche, **dadurch gekennzeichnet, dass** die ölige Phase der Emulsion aus einer oder mehreren Verbindungen besteht, ausgewählt aus den linearen oder verzweigten Alkanen mit von 7 bis 22 Kohlenstoffatomen.

5. Verfahren nach Anspruch 4, **dadurch gekennzeichnet, dass** die Alkane ausgewählt sind aus Dodecan und Hexadecan.

6. Verfahren nach einem der vorstehenden Ansprüche, **dadurch gekennzeichnet, dass** die kolloidalen Feststoffteilchen Mineralteilchen sind, ausgewählt aus der Gruppe der Metalloxide, -hydroxide und -sulfate.

7. Verfahren nach einem der vorstehenden Ansprüche, **dadurch gekennzeichnet, dass** die Teilchen ausgewählt sind aus Siliciumdioxidnanopartikeln.

8. Verfahren nach einem der vorstehenden Ansprüche, **dadurch gekennzeichnet, dass** innerhalb der Emulsion die Menge der kolloidalen Feststoffteilchen von 3,5 mg Teilchen/ml der öligen Phase bis 8 mg Teilchen/ml der öligen Phase variiert.

9. Verfahren nach einem der vorstehenden Ansprüche, **dadurch gekennzeichnet, dass** die kolloidalen Feststoffteilchen durch Verbindungen funktionalisiert sind, die durch kovalente Bindungen an ihre Oberfläche gebunden sind, wobei die Verfahren hydrophobe Gruppierungen umfassen.

10. Verfahren nach einem der Ansprüche 1 bis 8, **dadurch gekennzeichnet, dass** die kolloidalen Feststoffteilchen durch Adsorption von Tensidmolekülen an ihren Oberflächen funktionalisiert sind.

11. Verfahren nach einem der vorstehenden Ansprüche, **dadurch gekennzeichnet, dass** das Massenverhältnis von Tensidmasse / Masse der kolloidalen Teilchen von 1 mg Tensid pro Gramm Teilchen bis 0,8 g Tensid pro Gramm Teilchen variiert.

12. Verfahren nach einem der vorstehenden Ansprüche, **dadurch gekennzeichnet, dass** die Siliciumdioxidvorläufer ausgewählt sind aus Tetramethoxyorthosilan, Tetraethoxyorthosilan, Dimethyldiethoxysilan und den Mischungen aus Dimethyldiethoxysilan mit Tetraethoxyorthosilan oder Tetramethoxyorthosilan.

13. Verfahren nach einem der vorstehenden Ansprüche, **dadurch gekennzeichnet, dass** die Konzentration an Siliciumdioxidvorläufer(n) innerhalb der wässrigen Phase der Emulsion von 25 bis 35 Massen-%, bezogen auf die Masse der wässrigen Phase, variiert.

14. Verfahren nach einem der vorstehenden Ansprüche, **dadurch gekennzeichnet, dass** die wässrige Phase der Emulsion des Weiteren einen oder mehrere Vorläufer eines Metalloxids der Formel MeO₂ beinhaltet, wobei Me ein aus Zr, Ti, Th, Nb, Ta, V, W und Al ausgewähltes Metall ist, in einer Menge variierend von 1 Massen-% bis 30 Massen-%, bezogen auf die Masse der Siliciumdioxidvorläufer.

15. Verfahren nach Anspruch 14, **dadurch gekennzeichnet, dass** die Metalloxidvorläufer ausgewählt sind aus Metallalkoxiden, -chloriden und -nitraten, ausgewählt aus Zr, Ti, Th, Nb, Ta, V, W und Al.

16. Verfahren nach einem der vorstehenden Ansprüche, **dadurch gekennzeichnet, dass** der Mineralisierungsschritt bei einem pH-Wert kleiner als oder gleich 1 realisiert wird.

17. Verfahren nach einem der vorstehenden Ansprüche, **dadurch gekennzeichnet, dass** es des Weiteren einen Monolithimprägnierungsschritt mittels einer Lösung beinhaltet, die ein Funktionalisierungsmittel enthält.

18. Verwendung eines anorganischen Materials, das in der Form eine alveolaren Monolithen vorliegt, bestehend aus einer Silicamatrix, umfassend miteinander verbundene Makroporen mit einer mittleren Dimension d_{A} von 1 µm bis 400 µm und Mikroporen einer mittleren Dimension d_{I} von 0,7 bis 2 nm, wie nach dem nach einem der vorstehenden Ansprüche definierten Verfahren erhalten, für die chemische Trennung und Filtration, das Durchführen von in heterogener Phase katalysierten chemischen Reaktionen, als Material zur Wärme- oder Schalldämmung oder weiterhin beim Drucken für die Fertigung von Kohlenstoffgerüsten mit kontrollierter Porosität.

19. Verwendung nach Anspruch 18, als hochfrequenzselektives akustisches Dämmmaterial.

20. Verwendung nach Anspruch 18, für die Zubereitung von Chromatographiesäulen mit hierarchischer und kalibrierter Porosität.

21. Verwendung nach Anspruch 20, **dadurch gekennzeichnet, dass** die Chromatographiesäule aus mehreren makroporösen und aufeinander gestapelten Monolithen besteht, wobei die Monolithen entweder identische Porositäten oder unterschiedliche Porositäten, resultierend aus der Mineralisation von Emulsionen, beinhaltend Tröpfchen unterschiedlicher Größen, und gleichzeitig mineralisiert, aufweisen, um Chromatographiesäulen mit einem Makroporositätsgradienten zu erzeugen.

## Claims

1. Process for preparing an inorganic material in the form of an alveolar monolith composed of a silica matrix having interconnected macropores with a mean dimension d_{A} from 1 µm to 400 µm and micropores with a mean dimension d_{I} from 0.7 to 2 nm, said process being **characterised in that** it comprises at least one step of mineralisation of an oil-in-water emulsion formed from droplets of an oily phase dispersed in a continuous aqueous phase and in which colloidal solid particles are present at the interface formed between the continuous aqueous phase and the dispersed droplets of oily phase, wherein:
- the volume fraction of the oily phase ranges from 64 to 82 %,
- said mineralisation step is performed without stirring and at a pH ≤ 3, in the presence of at least one silicon oxide precursor in an amount ≥ 3% by mass relative to the mass of the aqueous phase, and
- the amount of colloidal solid particles within the emulsion ranges from 0,05 mg of particles/mL of oily phase to 16 g of particles/mL of oily phase.

2. Process according to claim 1, **characterised in that** it comprises, in this order, the following steps:
i) the preparation of an aqueous phase containing at least one silicon oxide precursor in an amount ≥ 3% by mass relative to the mass of the aqueous phase and at least one acid in an amount sufficient to bring the aqueous phase to a pH ≤ 3;
ii) the addition to said aqueous phase of the colloidal solid particles;
iii) the addition, to the aqueous phase containing the colloidal particles, of the oily phase, with mechanical stirring until the said oil-in-water emulsion is obtained, and then
iv) leaving the emulsion resulting from step iii) to stand until the said material is obtained in the form of a macroporous silica monolith.

3. Process according to claim 1, wherein the oil-in-water emulsion is prepared in a single step by mixing, with mechanical stirring:
i) an aqueous phase containing at least one silicon oxide precursor in an amount ≥ 3% by mass relative to the mass of the aqueous phase, at least one acid in an amount sufficient to bring the aqueous phase to a pH ≤ 3, and colloidal solid particles in an amount ≥ 3% by mass relative to the mass of the aqueous phase, and
ii) an oily phase in an amount such that the volume fraction of the oily phase in the resulting emulsion ranges from 64 to 82%;
the said emulsion then being left to stand until the said material is obtained in the form of a macroporous silica monolith.

4. Process according to anyone of the preceding claims, **characterised in that** the oily phase of the emulsion includes one or more compounds selected from linear or branched alkanes containing from 7 to 22 carbon atoms.

5. Process according to claim 4, **characterised in that** the alkanes are chosen from dodecane and hexadecane.

6. Process according to anyone of the preceding claims, **characterised in that** the colloidal solid particles are mineral particles selected from the group of metal oxides, metal hydroxides and metal sulfates.

7. Process according to anyone of the preceding claims, **characterised in that** the particles are selected from silicon oxide nanoparticles.

8. Process according to anyone of the preceding claims, **characterised in that** in the emulsion, the amount of colloidal solid particles ranges from 3.5 mg of particles/mL of oily phase to 8 mg of particles/mL of oily phase.

9. Process according to anyone of the preceding claims, **characterised in that** the colloidal solid particles are functionalised with compounds covalently attached to their surface, the said compounds comprising hydrophobic groups.

10. Process according to anyone of claims 1 to 8, **characterised in that** the colloidal solid particles are functionalised by adsorption of surfactant molecules onto their surface.

11. Process according to anyone of the preceding claims, **characterised in that** the mass ratio defined by the mass of surfactant/mass of colloidal particles ranges from 1 mg of surfactant per gram of particles to 0.8 g of surfactant per gram of particles.

12. Process according to anyone of the preceding claims, **characterised in that** the silicon oxide precursors are selected from tetramethoxy-ortho-silane, tetraethoxy-ortho-silane, dimethyldiethoxysilane and mixtures of dimethyldiethoxysilane with tetraethoxy-ortho-silane or tetramethoxy-ortho-silane.

13. Process according to anyone of the preceding claims, **characterised in that** the concentration of silicon oxide precursor(s) in the aqueous phase of the emulsion ranges from 25% to 35% by mass relative to the mass of the aqueous phase.

14. Process according to anyone of the preceding claims, **characterised in that** the aqueous phase of the emulsion further comprises one or more precursors of a metal oxide of formula MeO₂ wherein Me is a metal is selected from Zr, Ti, Th, Nb, Ta, V, W and Al, in an amount ranging from 1% to 30% by mass relative to the mass of the silicon oxide precursors.

15. Process according to claim 14, **characterised in that** the metal oxide precursors are chosen from alkoxides, chlorides and nitrates of metals selected from Zr, Ti, Th, Nb, Ta, V, W and Al.

16. Process according to anyone of the preceding claims, **characterised in that** the mineralisation step is performed at a pH ≤1.

17. Process according to anyone of the preceding claims, **characterised in that** the process further comprises a step of impregnating the monolith using a solution containing a functionalising agent.

18. Use of an inorganic material in the form of an alveolar monolith composed of a silica matrix having interconnected macropores with a mean dimension d_{A} from 1 µm to 400 µm and micropores with a mean dimension d_{I} from 0.7 to 2 nm as obtained by the process according to anyone of the preceding claims, for separation chemistry and filtration, for performing heterogeneous phase catalysed chemical reactions, as material for thermal or phonic insulation, or as templates for manufacturing controlled-porosity carbon skeletons.

19. Use according to claim 18, as high-frequency-selective acoustic insulator.

20. Use according to claim 18, for the preparation of chromatography columns with hierarchic and calibrated porosity.

21. Use according to claim 20, **characterised in that** the chromatography column includes several macroporous monoliths stacked on one another, said monoliths comprising either identical porosities or different porosities resulting from the mineralisation of emulsions comprising droplets of different sizes and concomitantly mineralised to create chromatography columns with a macroporosity gradient.
